# FASCICULE DE BREVET EUROPEEN

(11) **EP 0 593 752 B1**
(45) Date de publication et mention de la délivrance du brevet: **20.11.1996**
(21) Numéro de dépôt: 93911842.8
(22) Date de dépôt: 04.05.1993
(51) Int. Cl.: F02D 13/02, F02B 25/04, F02B 25/14, F02B 31/00

(54) **PROCEDE D'ALIMENTATION POUR MOTEUR A COMBUSTION INTERNE A ALLUMAGE PAR COMPRESSION**
FÜLLUNGSVERFAHREN FÜR EINEN VERBRENNUNGSMOTOR MIT SELBSTZÜNDUNG
FEEDING METHOD FOR COMPRESSION IGNITION INTERNAL COMBUSTION ENGINES

(30) Priorité: 05.05.1992 FR 9205515
(43) Date de publication de la demande: 27.04.1994
(73) Titulaire: Melchior, Jean Frédéric, F-75014 Paris (FR)
(72) Inventeur: Melchior, Jean Frédéric, F-75014 Paris (FR)
(74) Mandataire: Bernasconi, Jean
(86) Numéro de dépôt international: FR9300426
(87) Numéro de publication internationale: WO9322549

(56) Documents cités:
- EP-A- 0 204 687
- EP-A- 0 397 521
- WO-A-87/04217
- DE-A- 3 149 500
- DE-A- 3 401 362
- DE-A- 3 828 742
- GB-A- 2 223 802
- US-A- 4 993 372

## Description

L'invention a pour objet un procédé d'alimentation pour moteur à combustion interne à allumage par compression, qui comprend :
au moins une chambre de travail constituée d'une chambre de combustion et du volume variable limité à l'intérieur d'un cylindre par un piston et par une culasse ;
des moyens distributeurs d'échappement et des moyens distributeurs d'admission permettant de mettre cycliquement en communication ladite chambre de travail respectivement avec une première cavité recueillant les gaz de combustion formés dans la chambre de travail et successivement et/ou simultanément avec une deuxième cavité alimentée en air frais ; et
des moyens d'introduction de combustible sous pression dans ladite chambre de combustion.
Dans les moteurs à combustion interne du type défini ci-dessus (voir WO-A-87/04217), le combustible est injecté sous pression dans la chambre de combustion lorsque le piston est au voisinage du point mort haut (PMH), c'est-à-dire lorsque le susdit volume variable est au voisinage de sa valeur minimale. La compression adiabatique de l'air enfermé dans le cylindre échauffe cet air de telle sorte que sa température dépasse la température d'auto-inflammation du combustible injecté.

Le combustible finement pulvérisé est introduit dans la chambre de combustion sous forme de gouttelettes. En pénétrant dans le milieu ambiant, chaque gouttelette se vaporise et la vapeur de combustible diffuse dans ce milieu en créant une zone où les conditions d'allumage spontané sont atteintes, l'inflammation du combustible s'y produisant alors spontanément. Le temps qui s'écoule entre le début de l'injection du combustible et le début de la combustion, au cours de chaque cycle, s'appelle "le délai d'inflammation".

Cette première phase de la combustion est très brutale : la vapeur de combustible, pré-mélangée à l'air chaud (dans les conditions de pression et de température requises pour l'auto-inflammation), s'enflamme en masse. La vitesse de réaction est très élevée et, très rapidement, chaque gouttelette partiellement vaporisée a consommé la totalité de l'oxygène présent dans l'air qui est mélangé à la vapeur. En un temps si court, le mélange n'étant pas homogène, l'air non mélangé n'a pas le temps d'entretenir la combustion, compte tenu de son éloignement du centre (la gouttelette) de la combustion. Très rapidement, la réaction s'arrête donc ou du moins se ralentit du fait de la raréfaction de l'oxygène disponible. Cette phase de combustion en masse (combustion non contrôlée) s'appelle la "combustion en pré-mélange" (en anglais "pre-mix combustion") .

Les mouvements d'air et de combustible pré-établis ou induits par l'injection du combustible sous haute pression, ou provoqués par l'expansion des gaz échauffés par la réaction chimique brutale durant cette première phase de la combustion permettent à la réaction exothermique de se poursuivre. Celle-ci se développe ensuite selon un mode contrôlé, grâce aux transferts de masse par diffusion des zones riches en combustible vers les zones pauvres en combustible, c'est-à-dire vers les zones où la teneur en oxygène est élevée. Cette phase de combustion par diffusion s'appelle "la combustion en flamme de diffusion". Elle est beaucoup plus lente et se poursuit au rythme des mélanges entretenus par les mouvements relatifs d'air et de combustible dans la chambre de travail.

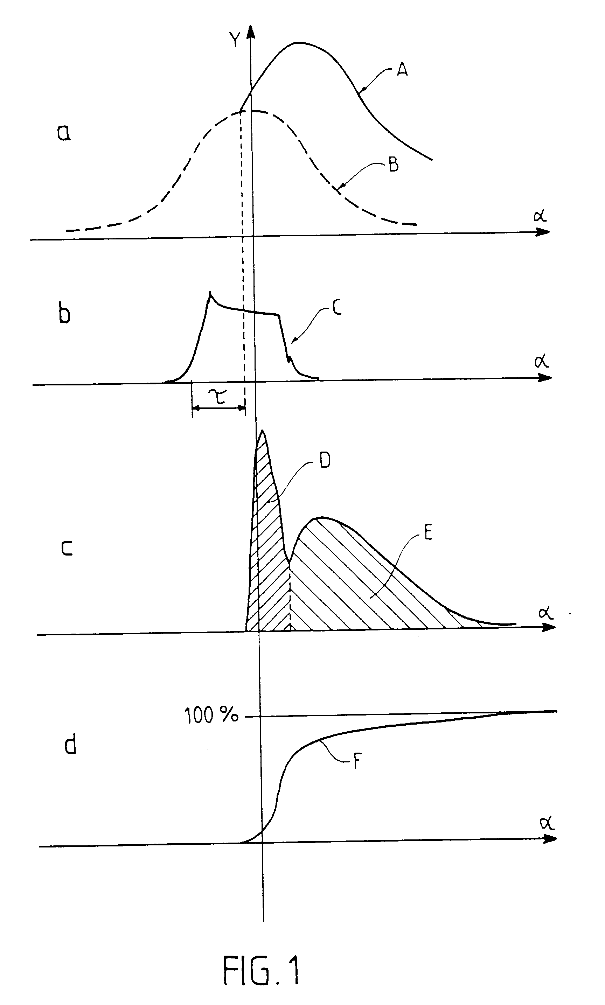

Les schémas a, b, c et d de la figure 1 ci-annexée illustrent les phénomènes qui viennent d'être décrits. Ces schémas ont pour abscisses communes l'angle α du vilebrequin par rapport à une position angulaire déterminée, l'axe commun Y des ordonnées correspondant au PMH du piston. Le schéma "a" montre la variation de la pression dans le cylindre du moteur, en trait plein (courbe A) lorsqu'il y a combustion et en trait interrompu (courbe B) lorsqu'il n'y a pas combustion. Le schéma "b" montre la variation de la position de l'aiguille d'injection (courbe C), laquelle aiguille fait partie des susdits moyens d'introduction de combustible sous pression, et il fait apparaître le délai d'inflammation τ qui est exprimé en durée angulaire entre la position angulaire du vilebrequin correspondant au début de l'introduction du combustible et celle correspondant au début de l'inflammation, détectée par le dégagement de chaleur. Sur le schéma "c", on a reporté en ordonnées le dégagement de chaleur instantané, la première aire D correspondant à la combustion en pré-mélange et la deuxième aire E à la combustion en flamme de diffusion. Sur le schéma "d" enfin, on a reporté en ordonnées la quantité de chaleur cumulée, en pourcentages de la chaleur totale dégagée au cours d'un cycle, la courbe F ainsi obtenue étant par conséquent tangente à l'ordonnée 100 %.

Plus le délai d'inflammation est long, plus la quantité du combustible injecté avant inflammation est importante, ce qui entraîne les inconvénients suivants :
- combustion brutale, d'où bruits (cognements du moteur Diesel) et vibrations créées par la variation brusque de la pression dans la chambre de travail (entraînant fatigue des structures, claquements et bris des segments du piston) ;
- formation d'oxydes d'azote NOₓ très polluants (une partie importante des NOₓ étant formée dans la zone où la combustion se développe en pré-mélange et où des températures élevées sont maintenues pendant une période prolongée).

Les constructeurs de moteurs Diesel se sont donc efforcés de réduire le délai d'inflammation (par exemple en retardant l'instant où le combustible est introduit) tout en recherchant à refroidir l'air frais admis dans le ou les cylindres, de façon à en augmenter la densité et à ne pas dépasser autant que possible les températures de cycle au-dessus desquelles les oxydes d'azote ont tendance à se produire en quantité excessive, ce qui tend à augmenter le délai d'inflammation. Les solutions qu'ils ont proposées jusqu'ici n'ont pas donné entière satisfaction, notamment du point de vue du rendement et de l'émission de particules et de fumées à l'échappement.

L'invention a pour but de résoudre de façon originale le problème du raccourcissement du délai d'inflammation, sans pour autant dépasser les températures de cycle au-dessus desquelles la production des oxydes d'azote devient trop importante, non seulement en remédiant aux inconvénients rappelés ci-dessus, mais encore en permettant de brûler des combustibles plus "rustiques", ayant notamment un indice de cétane plus faible, et donc moins chers à produire.

A cet effet, le procédé d'alimentation qui a été défini en préambule est essentiellement caractérisé en ce que les moyens distributeurs sont actionnés de telle façon qu'une part importante des gaz de combustion du cycle précédent soit retenue dans la chambre de travail pendant le processus consistant à évacuer les gaz de combustion et à les remplacer en partie par de l'air frais, par ouverture des moyens distributeurs d'échappement et d'admission, ce processus étant celui du transvasement dans le cas d'un moteur à quatre temps et celui du balayage dans le cas d'un moteur à deux temps,

la communication entre la deuxième cavité et la chambre de travail, lorsque les moyens distributeurs d'admission sont en position d'ouverture, d'une part, et la forme des parois de la chambre de travail, d'autre part, sont agencées de manière que le flux d'air frais pénètre dans la chambre de combustion, alors que le volume de la chambre de travail devient minimal en raison du mouvement relatif du piston, de façon à provoquer un mouvement de rotation intense du fluide de travail à l'intérieur de la chambre de combustion, en empêchant autant que possible, grâce à la centrifugation de l'air frais obtenue par ce mouvement de rotation et à la différence de densité entre l'air frais et les gaz de combustion, l'air frais de se mélanger à l'intérieur de la chambre de combustion aux gaz de combustion retenus dans celle-ci, et à former dans ladite chambre de combustion une zone centrale où la concentration des gaz de combustion et la température sont maximales et une zone périphérique où la concentration d'air frais est maximale et la température est minimale, et

les susdits moyens d'introduction de combustible sous pression sont agencés de manière à injecter le combustible directement dans la susdite zone centrale, au moins au début de chaque période d'injection.

De préférence, la masse des gaz de combustion retenus dans la chambre de travail, d'un cycle sur l'autre, est au moins égale à 10 %, de préférence à 15 %, de la masse du fluide de travail contenu dans cette dernière chambre au moment où les communications entre celle-ci et l'une et l'autre des susdites cavités viennent d'être interrompues au cours de chaque cycle, alors que le moteur fonctionne au moins approximativement à sa vitesse nominale.

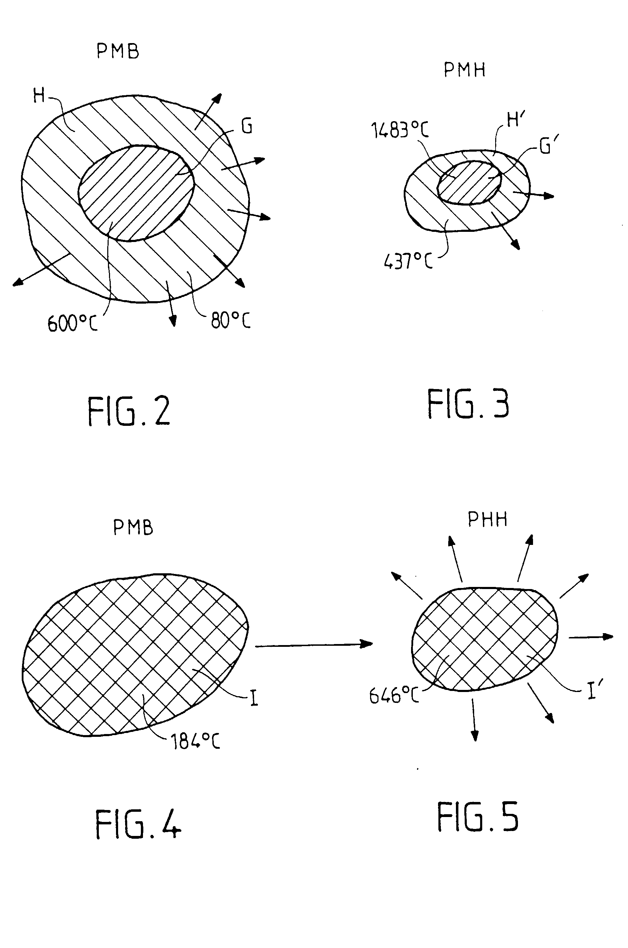

De cette façon et comme il sera expliqué plus en détail à l'aide des figures 2 à 5, il est organisé une combustion dont le délai d'inflammation est extrêmement bref (même avec l'utilisation de combustibles peu raffinés, dits "rustiques"), voire nul, par augmentation considérable de la température du milieu dans lequel est injecté le combustible de façon à provoquer sa vaporisation quasi immédiate. Néanmoins, la température moyenne du fluide de travail est maintenue à des niveaux raisonnables, ce qui permet une densité élevée et par conséquent une puissance spécifique élevée et un taux faible de production d'oxydes d'azote. De plus, le milieu gazeux surchauffé est maintenu à distance des parois de la chambre de combustion, par la présence d'une couche intermédiaire d'air frais, ce qui empêche une surcharge thermique du moteur et limite les pertes aux parois.

Il est à noter que l'invention va à l'encontre des idées généralement admises dans la construction des moteurs Diesel où les spécialistes s'efforcent de privilégier une pureté maximale en air frais du fluide de travail, plutôt que de privilégier une pureté relativement faible (90 %, voire 85 %, ou même moins en masse) et d'injecter le combustible dans une zone où la concentration en gaz de combustion retenus d'un cycle sur l'autre est maximale, étant rappelé que, dans un moteur à allumage par compression, les gaz de combustion contiennent encore une proportion notable d'oxygène disponible.

Selon un perfectionnement particulièrement surprenant, on choisit la température de l'air admis et la proportion des gaz retenus dans la chambre de travail, d'un cycle sur l'autre, compte tenu des autres paramètres de fonctionnement du moteur, de façon telle que, si on mélangeait les gaz retenus et l'air frais avant d'injecter le combustible, la température du mélange ainsi obtenu au moment de l'injection pourrait être inférieure à celle où l'auto-inflammation du combustible se produit de façon stable et sans production excessive d'imbrûlés. Ce perfectionnement a l'avantage de permettre à la fois de refroidir de façon intense l'air frais d'alimentation (pour limiter la charge thermique des parois et réduire les températures maximales du cycle à des valeurs inférieures à celles qui provoquent une formation excessive d'oxydes d'azote nocifs) et d'avoir un rapport volumétrique effectif réduit (pour limiter la charge mécanique des pièces), tout en conservant des conditions d'auto-inflammation parfaites, à délai d'inflammation réduit.

Il est également avantageux de choisir la température de l'air admis et la proportion des gaz retenus dans la chamre de travail, d'un cycle sur l'autre, compte tenu des autres paramètres de fonctionnement du moteur, de façon telle que la température moyenne maximale du fluide de travail ne dépasse pas la valeur, de l'ordre de 1 500°C, à partir de laquelle la production de NOₓ devient excessive. L'invention s'applique de préférence aux moteurs fonctionnant selon un cycle à deux temps.

De préférence, les susdits moyens distributeurs sont actionnés de telle façon que le volume d'air frais introduit dans la chambre de travail soit inférieur au volume de la chambre de travail à l'instant où les moyens distributeurs d'échappement et d'admission viennent de revenir en position de fermeture au cours d'un cycle.

Selon une construction avantageuse, les moyens distributeurs d'admission sont essentiellement constitués par des lumières communiquant avec la susdite deuxième cavité, aménagées dans la partie de la paroi latérale du cylindre qui est parcourue par le piston et découvertes par celui-ci lorsque le volume de la chambre de travail est au voisinage de sa valeur maximale, lesdites lumières étant inclinées par rapport à une normale à ladite paroi latérale, située au voisinage de ces lumières, de façon à créer le susdit mouvement de rotation ; en outre, les moyens distributeurs d'échappement sont constitués par au moins une soupape d'échappement aménagée dans la susdite culasse et disposée de telle façon qu'elle laisse libre la région centrale de celle-ci en permettant de disposer dans cette région les moyens d'introduction de combustible sous pression. Dans ce cas, la chambre de combustion est de préférence constituée par l'espace qui est délimité par la culasse, la susdite paroi latérale et le piston lorsque celui-ci est au voisinage de la position correspondant à la valeur minimale du volume de la chambre de travail. La surface transversale du piston contribuant à délimiter la chambre de combustion, qui est de préférence une surface de révolution, et la valeur minimale de la distance entre le piston et la culasse sont préférablement telles que les mouvements radiaux du fluide de travail créés par la coopération entre la susdite surface du piston et la culasse soient aussi réduits que possible. De cette façon, le mélange entre l'air frais et les gaz de combustion recyclés est réduit le plus possible.

L'invention va être exposée plus en détail à l'aide des figures annexées.

La figure 1 montre des schémas qui ont été commentés ci-dessus.

Les figures 2 et 3 montrent schématiquement la répartition des températures et des volumes dans la chambre de travail, respectivement avant compression (au PMB) et au moment du début de l'injection de combustible (au PMH), selon un mode de réalisation particulier du procédé d'alimentation conforme à l'invention.

Les figures 4 et 5 sont des figures analogues respectivement aux figures 2 et 3, mais selon un procédé d'alimentation voisin des procédés usuels.

Les figures 6 et 7 représentent schématiquement, respectivement en coupe axiale et en coupe transversale selon la ligne VII-VII de la figure 6, un moteur à deux temps qui sert à mettre en oeuvre le procédé conforme à l'invention et dont le piston occupe une position voisine du PMB.

La figure 8 représente le moteur des figures 6 et 7 dont le piston occupe une position voisine du PMH, pour laquelle se produisent l'injection et l'inflammation du combustible.

La figure 9 illustre la répartion des températures, de l'air frais et de l'oxygène dans les conditions de la figure 8.

Les figures 10 et Il représentent schématiquement un moteur à deux temps suivant un deuxième mode de réalisation, en coupes axiales respectivement par le plan de symétrie P de la figure 11 et par un plan perpendiculaire à ce plan de symétrie, le piston de ce moteur occupant une position voisine du PMB.

La figure 12 est une vue en perspective du moteur des figures 10 et 11, le piston de ce moteur occupant une position voisine du PMH.

Les figures 13 à 15 sont des diagrammes d'ouverture des soupapes d'échappement et d'admission dans un moteur à quatre temps servant à mettre en oeuvre le procédé conforme à l'invention.

Les figures 16 à 18 illustrent schématiquement une première variante pour soumettre l'air d'admission à un mouvement tournant, respectivement par des vues en élévation selon deux directions perpendiculaires entre elles et par une vue en plan.

Les figures 19 à 21 d'une part et les figures 22 à 24 d'autre part illustrent schématiquement une deuxième et une troisième variantes pour soumettre l'air d'admission à un mouvement tournant, respectivement selon des vues analogues à celles des figures 16 à 18.

Avant de décrire en détail le procédé d'alimentation conforme à l'invention, il semble utile de distinguer ses buts et ses résultats de ceux de l'état de la technique, à l'aide des schémas des figures 2 à 5.

Ces schémas illustrent, par des variations de surface, les variations de volume de la chambre de travail. Selon le procédé conforme à l'invention, on s'arrange pour qu'il se forme, dans la chambre de travail au voisinage du point mort bas, une zone centrale G où la concentration des gaz de combustion, provenant du cycle précédent, est maximale et une zone périphérique H où la concentration d'air frais est maximale (figure 2). A supposer que le moteur soit suralimenté, on peut estimer à 80°C environ la température de l'air frais (en H) et à 600°C environ la température des gaz de combustion (en G). Au voisinage du point mort haut, c'est-à-dire après compression et au moment où se fait l'injection, il subsiste une zone centrale G' et une zone périphérique H', de volumes moindres et de températures accrues (figure 3). Avec les taux de compression des moteurs actuels de l'ordre de 6 et une proportion de 20 % (en masse) de gaz de combustion retenus d'un cycle sur l'autre, la température de la zone centrale G' est maintenant de l'ordre de 1483°C tandis que la température de la zone périphérique H' est de l'ordre de 437°C. Selon l'invention, l'injection se fait dans la zone centrale G' dont la température est très élevée tandis que la température de la zone périphérique H' reste modérée, ce qui soustrait les parois du cylindre à des surcharges thermiques importantes.

Dans les mêmes hypothèses mais en mélangeant à l'air frais les gaz de combustion retenus, on obtient, selon les procédés d'alimentation usuels (à supposer qu'on ait pris les dispositions de retenue des gaz de combustion d'un cycle sur l'autre, propres à l'invention), des volumes de compositions et températures relativement homogènes I au point mort bas (figure 4) et I' au point mort haut (figure 5), la température du fluide de travail passant de 184°C environ (figure 4) à 646°C environ (figure 5). On voit d'une part que l'injection se fait (figure 5) dans un fluide à température (646°C environ) beaucoup plus basse que selon le procédé conforme à l'invention (1483°C environ, figure 3) et que, d'autre part, la température périphérique est nettement plus élevée (646°C environ à la figure 5 au lieu de 437°C environ à la figure 3), les conséquences de ces différences de température ayant été exposées ci-dessus.

Il est même possible, selon l'invention, de choisir la proportion des gaz retenus dans la chambre de travail, d'un cycle sur l'autre, de façon telle que si on mélangeait les gaz retenus et l'air frais avant d'injecter le combustible, la température du mélange ainsi obtenu serait inférieure à celle où l'auto-inflammation du combustible se produit de façon stable et sans production excessive d'imbrûlés. Un exemple numérique de ce perfectionnement (non illustré sur les dessins) est donné ci-après :
- température de l'air frais introduit dans la chambre de travail : 50°C ;
- température des gaz de combustion : 600°C ;
- proportion massique d'air frais contenu dans le fluide de travail en début de compression : 90 % ;
- rapport volumétrique effectif : 5 ;
- température du fluide gazeux après compression, si l'air frais et les gaz de combustion retenus étaient mélangés avant d'injecter le combustible : 436°C ;
- température de l'air dans la zone périphérique H' selon l'invention, après compression : 342°C ;
- température des gaz dans la zone centrale G' selon l'invention, après compression : 1389°C.

A l'aide de ce deuxième exemple, on voit qu'il est possible, grâce à la stratification gazeuse conforme à l'invention et sans modifier les autres paramètres de fonctionnement du moteur, de faire passer la température du milieu gazeux où est injecté le combustible, d'une valeur basse (436°C) pour laquelle se produit une fumée blanche d'échappement et l'auto-inflammation est problématique à une valeur élevée (1389°C) pour laquelle ces inconvénients disparaissent.

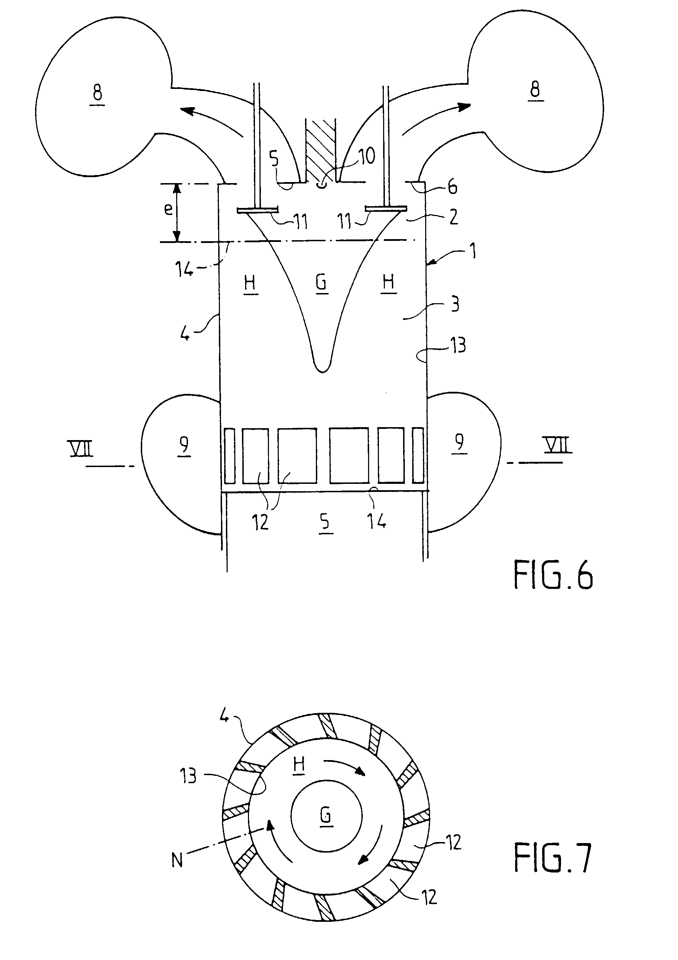

L'invention va maintenant être décrite en regard des figures 6 et 7 qui représentent schématiquement un moteur à deux temps. Ce moteur comprend :
- au moins une chambre de travail 1 constituée d'une chambre de combustion 2 et du volume variable 3 limité à l'intérieur d'un cylindre 4 par un piston 5 et par une culasse 6 ;
- des moyens distributeurs d'échappement et des moyens distributeurs d'admission permettant de mettre cycliquement en communication la chambre de travail 1 avec une première cavité 8 recueillant les gaz de combustion formés dans la chambre de travail 1 et successivement et/ou simultanément avec une deuxième cavité 9 alimentée en air frais ; en général, la première cavité 8 est constituée par un collecteur d'échappement et la deuxième cavité 9 par une bâche d'admission, alimentée en air frais par un turbocompresseur de suralimentation (non montré) ; et
- des moyens 10 servant à introduire du combustible sous pression dans la chambre de combustion 2.

Selon le mode de réalisation représenté aux figures 6 et 7, les moyens distributeurs d'échappement sont essentiellement constitués par au moins une soupape d'échappement 11 aménagée dans la culasse 6 et les moyens distributeurs d'admission par des lumières 12 aménagées dans la partie de la paroi latérale 13 du cylindre 4 qui est parcourue par le piston 5 et découvertes cycliquement par ce dernier lorsque le volume de la chambre de travail 1 est au voisinage de sa valeur maximale.

Selon l'invention, les moyens distributeurs 11 et 5,12 sont actionnés de telle façon qu'une part importante des gaz de combustion du cycle précédent soit retenue dans la chambre de travail 1 pendant le processus consistant à évacuer les gaz de combustion et à les remplacer en partie par de l'air frais, par ouverture simultanée des moyens distributeurs 11 et 5,12, c'est-à-dire pendant le balayage puisqu'il s'agit ici d'un moteur à deux temps.

En outre, la communication entre la deuxième cavité 9 et la chambre de travail 1, lorsque les moyens distributeurs d'admission 5,12 sont en position d'ouverture, d'une part, et la forme des parois de la chambre de travail 1, d'autre part, sont agencées de manière que le flux d'air frais pénètre dans la chambre de combustion 2, alors que le volume de la chambre de travail 1 devient minimal en raison du mouvement relatif du piston 5, de façon à provoquer un mouvement de rotation intense du fluide de travail à l'intérieur de la chambre de combustion 2 en empêchant autant que possible, grâce à la centrifugation de l'air frais obtenue par ce mouvement de rotation et à la différence de densité entre l'air frais et les gaz de combustion, l'air frais de se mélanger à l'intérieur de la chambre de combustion 2 aux gaz de combustion retenus dans celle-ci, et à former dans ladite chambre de combustion la susdite zone centrale G où la concentration des gaz de combustion est maximale et la susdite zone périphérique H où la concentration d'air frais est maximale.

Enfin, les susdits moyens d'introduction de combustible 10 sont agencés de manière à injecter le combustible directement dans la zone centrale G, au moins au début de chaque période d'injection.

Il a été dit ci-dessus qu'une part importante des gaz de combustion du cycle précédent est retenue dans la chambre de travail 1 pendant le balayage. Ceci signifie que la masse des gaz de combustion ainsi retenus est avantageusement égale à au moins 10 %, de préférence à au moins 15 %, en particulier à 20 %, de la masse du fluide de travail contenu dans cette chambre 1, au moment où les communications entre celle-ci et l'une et l'autre des cavités 8 et 9 viennent d'être interrompues au cours de chaque cycle. Cette limite de pourcentage n'est bien entendu valable que lorsque le moteur fonctionne au moins approximativement à sa vitesse nominale et notamment en dehors des périodes de démarrage.

Selon le mode de réalisation représenté, chacune des lumières 12 est inclinée par rapport à une normale N (figure 7) à la paroi latérale 13, située au voisinage de la lumière 12 considérée, de façon à créer le susdit mouvement de rotation, schématisé par des flèches à la figure 7. Plus précisément, chaque lumière est approximativement symétrique par rapport à un plan perpendiculaire à l'axe du cylindre 4 (tel que le plan de coupe VII-VII de la figure 6) et la normale N est parallèle à ce plan ou située dans celui-ci. De plus, la ou chacune des soupapes d'échappement 11 (au nombre de deux selon l'exemple représenté à la figure 6) est disposée de telle façon qu'elle laisse libre la région centrale de la culasse 6 en permettant de disposer dans cette région les moyens d'introduction de combustible 10.

Dans ce cas, la chambre de combustion 2 est constituée par l'espace qui est délimité par la culasse 6, la paroi latérale 13 du cylindre 4 et le piston 5 lorsque celui-ci est au voisinage de la position correspondant à la valeur minimale du volume de la chambre de travail 1. A la figure 6, on a représenté en trait mixte, lorsque le piston 5 occupe la position qui vient d'être définie, la surface transversale 14 du piston 5 qui contribue à délimiter la chambre de combustion 2 et en trait plein le piston 5 à son PMB.

De préférence, la chambre de combustion 2 a une forme de révolution et la valeur minimale "e" de la distance entre le piston 5 et la culasse 6, au cours du déplacement du piston, est telle que les mouvements radiaux du fluide de travail créés par la coopération entre la surface transversale 14 du piston 5 et la culasse 6 soient aussi réduits que possible. A cet effet, la surface 14 et le ciel 15 de la culasse 6 sont aussi parallèles que possible et peuvent en particulier être tous deux plans.

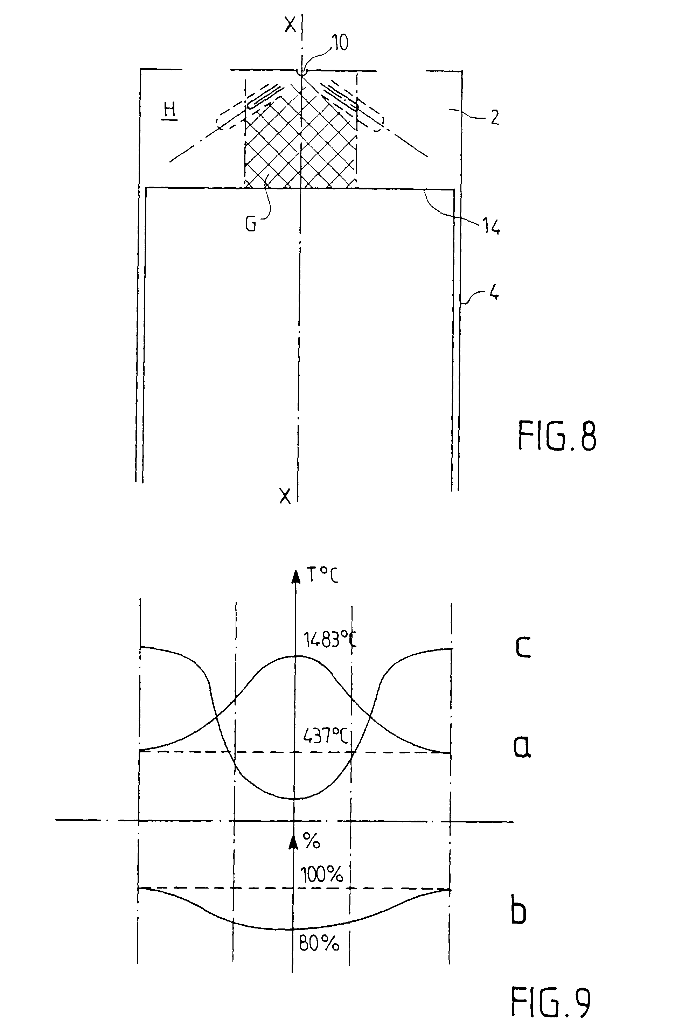

La figure 8 représente le moteur des figures 6 et 7 au moment de l'injection et de l'inflammation du combustible tandis que la figure 9 représente en "a" les variations de la température locale du fluide de travail, en "b" les variations de la concentration en air (% en masse) du fluide de travail, en fonction de la distance à l'axe X-X du cylindre 4, mesurée à la même échelle qu'à la figure 8 et en "c" la concentration en oxygène libre du fluide de travail sur les mêmes abscisses que la courbe "b". Aux figures 9a et 9b, on retrouve les valeurs numériques de l'exemple décrit ci-dessus, en regard de la figure 3.

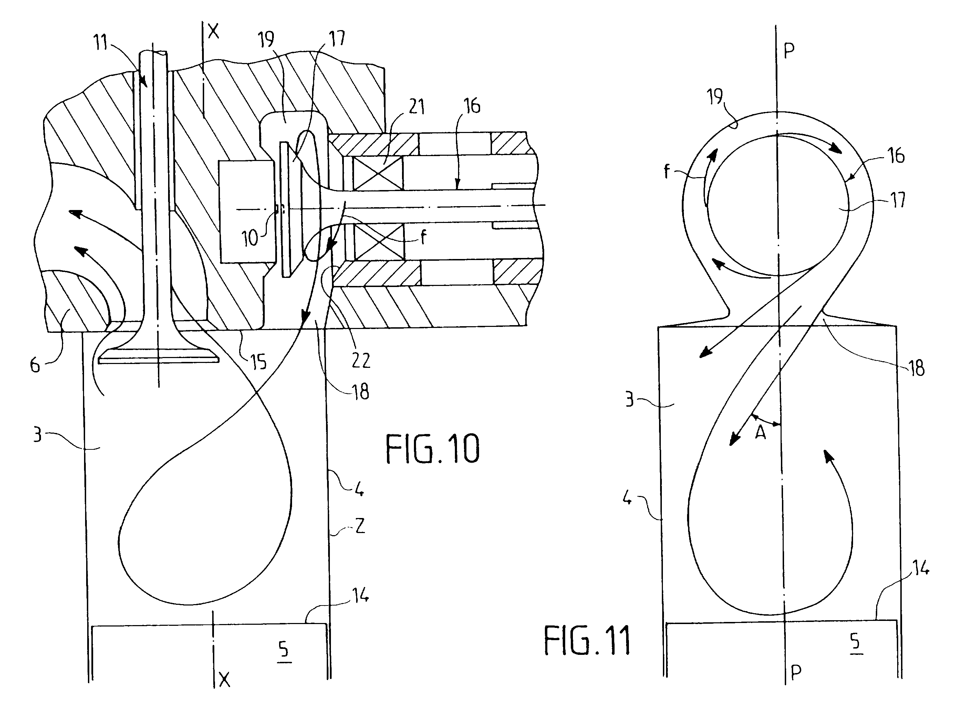

On se réfère maintenant au mode de réalisation des figures 10 à 12, selon lequel les moyens distributeurs d'échappement et les moyens distributeurs d'admission sont constitués tous deux par des soupapes d'échappement 11 et d'admission 16 aménagées dans la culasse 6.

Dans ce cas, la chambre de combustion 2 est constituée par évidement 19, de préférence de révolution, aménagé dans la culasse 6 et dans lequel est située la tête 17 de la soupape d'admission 16. Cet évidement communique avec le volume 3 que parcourt le piston 5 par un passage 18 dont les parois sont agencées pour diriger le flux d'air frais vers le piston 5 lorsque les soupapes d'échappement 11 et d'admission 16 sont ouvertes simultanément et que le piston 5 se trouve dans des positions correspondant à des valeurs du volume 3 voisines de la valeur maximale (figures 10 et 11). Les moyens d'introduction 10 sont situés dans l'évidement 19.

La soupape d'échappement 11 est de préférence située sur le ciel de culasse 15. L'évidement 19 et le volume 3 communiquent ensemble par le passage 18 dont les parois sont agencées de manière à diriger le flux d'air frais introduit dans le volume 3, lorsque les soupapes d'échappement 11 et d'admission 16 sont ouvertes simultanément et que le piston 5 se trouve au voisinage de la position (représentée aux figures 10 et 11) correspondant au volume maximal de la chambre de travail 1, en direction du piston 5 et tangentiellementà la partie de la paroi latérale 13 du cylindre 4 qui est la plus éloignée de la soupape d'échappement 11. On réduit ainsi tout risque de passage direct de l'air frais vers l'échappement.

De préférence encore, on oriente les parois du passage 18 de telle façon que le flux d'air frais dirigé vers le piston 5 ait une direction inclinée d'un angle A (figure 11) par rapport à l'axe de déplacement du piston 5 et dans un plan tangent à la paroi latérale du cylindre, passant de préférence au voisinage de la génératrice Z (figure 10) la plus éloignée de la soupape d'échappement de façon à induire un mouvement hélicoïdal dudit flux d'air dans le volume compris entre le piston 5 et la culasse 6 (voir, aux figures 10 et 11, les flèches symbolisant la circulation de l'air frais).

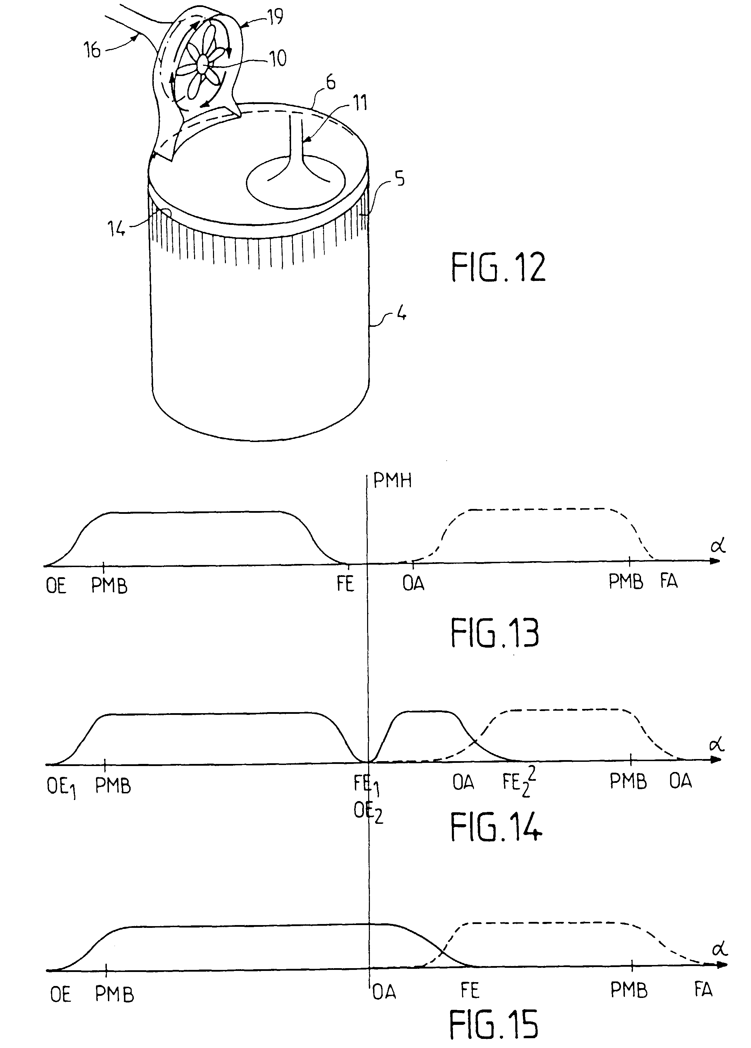

De préférence encore, la forme du passage 18 est telle que, quand le piston 5 remonte, le fluide de travail est injecté dans la chambre de combustion principalement tangentiellement à une paroi périphérique du passage 18, de façon à créer un mouvement de rotation dans ledit évidement autour de son axe de révolution, comme schématisé par des flèches à la figure 12.

Il est judicieux de faire déboucher les moyens d'introduction 10 dans la chambre de combustion 2, ou dans l'évidement 19, en face de la soupape d'admission 16, dans la zone centrale de l'évidement 19, comme schématisé à la figure 12.

Enfin, des moyens sont prévus pour soumettre l'air à un mouvement tournant, schématisé par des flèches f aux figures 10 et 11, lorsqu'il débouche dans l'évidement 19. De tels moyens ont été décrits dans la demande de brevet français n° 90 06781 du 31 mai 1990 (FR-A-2.662.745) et peuvent être constitués par exemple par un aubage hélicoïdal 21 situé directement en amont du siège 22 de la soupape d'admission 16.

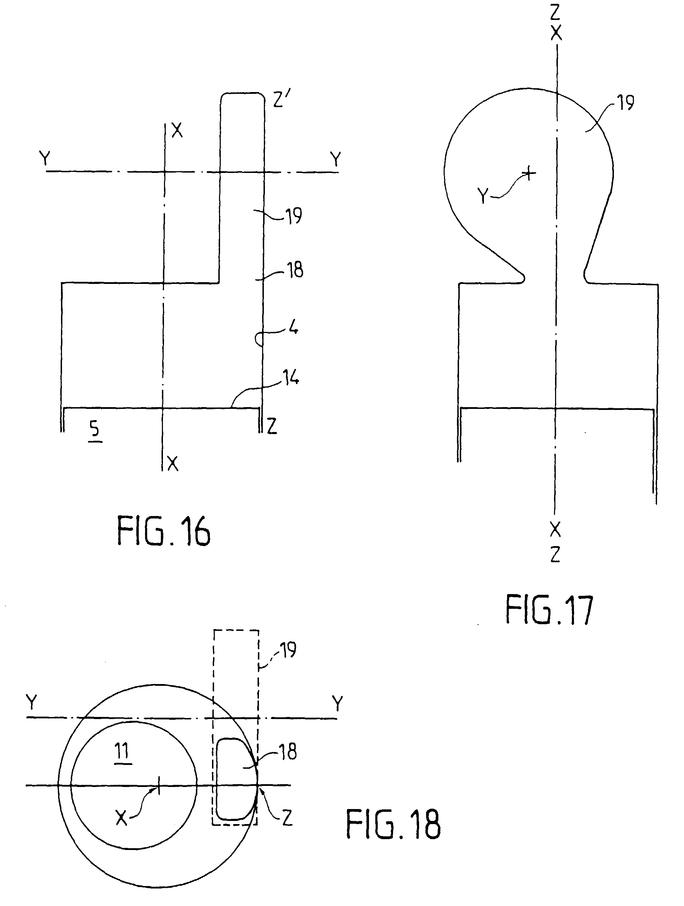

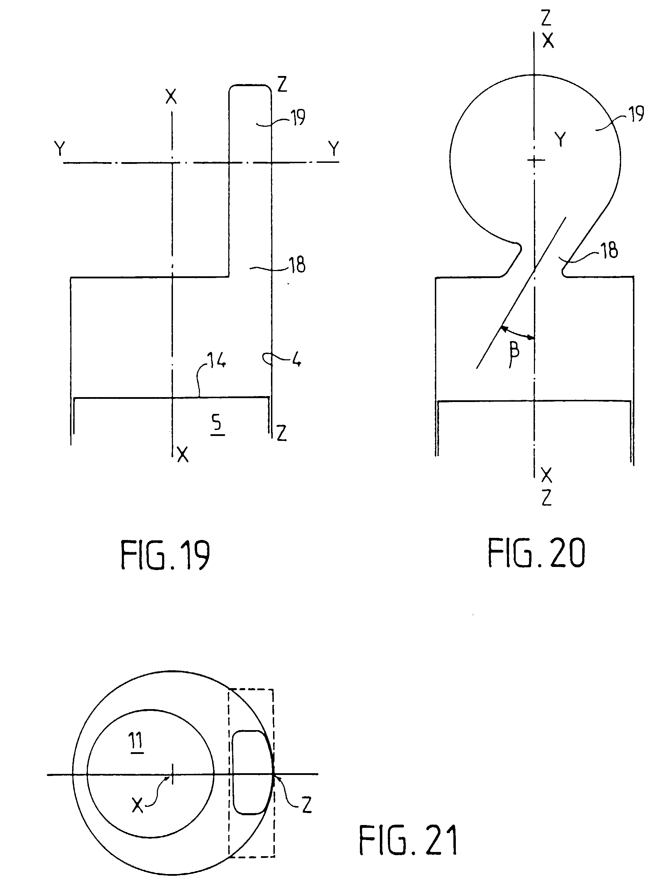

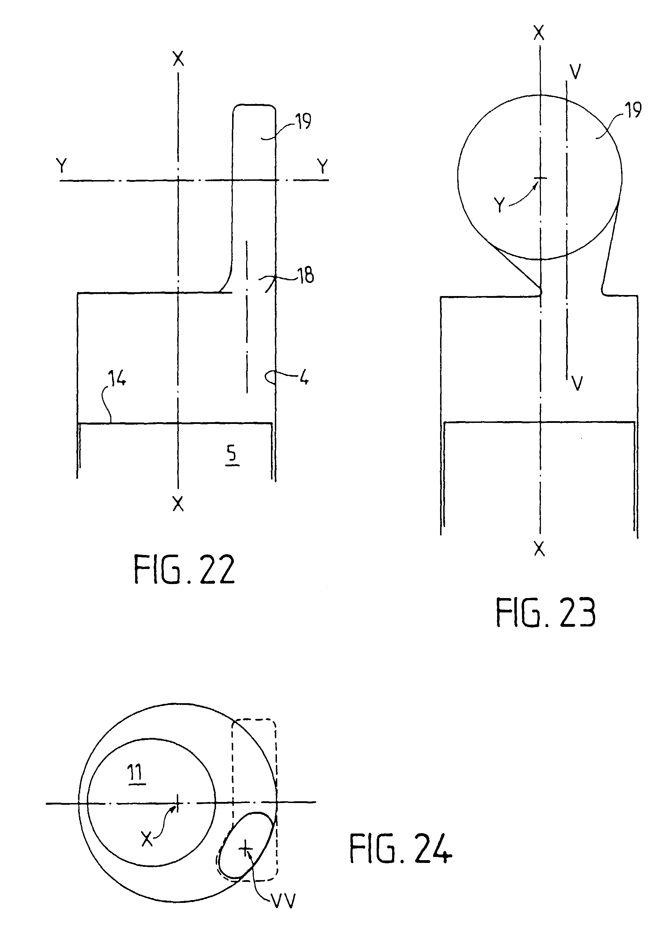

Pour soumettre l'air à un mouvement tournant, on peut encore avoir recours à l'une des solutions suivantes :
a) comme représenté aux figures 16 à 18, l'évidement 19, qui est de révolution, a son axe Y-Y qui est situé approximativement dans un plan perpendiculaire à l'axe X-X du cylindre 4 et ne passant pas par cet axe X-X, le canal de tranfert 18 débouchant de préférence tangentiellement à la paroi du cylindre 4 au voisinage de la génératrice Z de celui-ci la plus éloignée de la soupape d'échappement 11 ;
b) comme reprénté aux figures 19 à 21, l'évidement 19 est de révolution autour d'un axe Y-Y perpendiculaire à l'axe X-X du cylindre 4 et de préférence sécant avec celui-ci (ou passant à son voisinage immédiat) ; le canal de transfert 18 débouche tangentiellement à la paroi du cylindre 4, au voisinage de la génératrice Z de ce cylindre la plus éloignée de la soupage d'échappement 11 ; et les parois latérales du canal de transfert 18 sont sensiblement parallèles entre elles et inclinées d'un angle β par rapport à l'axe X-X du cylindre 4 dans un plan tangent audit cylindre 4 passant de préférence par la génératrice Z la plus éloignée de la soupape d'échappement 11 ;
c) comme représenté aux figures 22 à 24, l'évidement 19 est de révolution, d'axe Y-Y situé dans un plan perpendiculaire à l'axe X-X du cylindre 4 et de préférence sécant avec celui-ci (ou passant à son voisinage immédiat) ; le canal de transfert 18 débouche tangentiellement à la paroi du cylindre 4 ; l'axe V-V parallèle à l'axe X-X du cylindre 4 et passant par le centre du débouché du canal de transfert 18 n'est pas sécant avec l'axe de révolution Y-Y de l'évidement 19.

Dans ce qui précède, il a été supposé que le procédé conforme à l'invention était mis en oeuvre dans un moteur à deux temps, mais il peut également s'utiliser dans un moteur à quatre temps, moteur dont les moyens distributeurs d'échappement comprennent en général au moins une soupape d'échappement 11 et les moyens distributeurs d'admission au moins une soupape d'admission 16.

Pour un moteur à quatre temps, la rétention des gaz de combustion est obtenue par le réglage de la distribution de façon à éviter le refoulement complet des gaz hors du cylindre ou encore à provoquer leur réaspiration, avant d'entamer le processus d'admission de l'air frais lors de la course descendante du piston.

Il suffit dans ce cas de décrire le diagramme d'ouverture des soupapes d'échappement et d'admission pour mettre l'homme de métier en mesure d'adapter les moteurs à quatre temps connus au procédé conforme à l'invention, à l'aide des figures 13 à 15 qui représentent, en fonction de l'angle α du vilebrequin ou arbre principal du moteur, les levées d'ouverture respectivement de la soupape d'échappement (en trait plein) et de la soupape d'admission (en trait interrompu).

Selon le diagramme de la figure 13, il y a fermeture anticipée de l'échappement et ouverture retardée de l'admission. Les moyens distributeurs d'échappement sont fermés (FE = fermeture de l'échappement) avant que le volume de la chambre de travail 1 soit minimal et les moyens distributeurs d'admission ne s'ouvrent (OA = ouverture de l'admission) que pendant la course du piston 5 correspondant à l'accroissement du susdit volume, au moment où l'arbre principal du moteur a une position sensiblement symétrique, par rapport à la position correspondant à la valeur minimale de ce volume, de celle correspondant à la fermeture des moyens distributeurs d'échappement. "OE" désigne l'ouverture de l'échappement et "FA" la fermeture de l'admission.

Selon le diagramme de la figure 14, les moyens distributeurs d'échappement sont fermés (en FE₁) lorsque le volume de la chambre de travail 1 est voisin de sa valeur minimale, lorsqu'il risque de se produire une interférence entre le piston 5 et les moyens distributeurs d'échappement, puis rouverts lorsque ce volume atteint puis dépasse sa valeur minimale, puis fermés à nouveau en (FE₂) alors que les moyens distributeurs d'admission commencent à s'ouvrir et que le piston est dans sa course d'augmentation dudit volume. On utilise à cet effet un arbre à came d'échappement à double bosse de façon à réaspirer une partie des gaz refoulés.

Le diagramme de la figure 15 est une variante de celui de la figure 14 qui correspond au cas où il ne risque pas de se produire d'interférence entre le piston 5 et les moyens distributeurs d'échappement. C'est le cas par exemple lorsque la commande de l'échappement se fait par un boisseau, en remplacement d'une soupape, ou lorsqu'elle se fait par une soupape située dans une chapelle ou dans une chambre séparée de la chambre principale. Il n'est donc pas alors nécessaire de refermer temporairement les moyens distributeurs d'échappement, comme on le voit par comparaison entre les diagrammes des figures 14 et 15.

## Revendications

1. Procédé d'alimentation pour moteur à combustion interne à allumage par compression, qui comprend
au moins une chambre de travail constituée d'une chambre de combustion et du volume variable limité à l'intérieur d'un cylindre par un piston et par une culasse ;
des moyens distributeurs d'échappement et des moyens distributeurs d'admission permettant de mettre cycliquement en communication ladite chambre de travail respectivement avec une première cavité recueillant les gaz de combustion formés dans la chambre de travail et successivement et/ou simultanément avec une deuxième cavité alimentée en air frais ; et
des moyens d'introduction de combustible sous pression dans ladite chambre de combustion ;
caractérisé en ce que
lesdits moyens distributeurs sont actionnés de telle façon qu'une part importante des gaz de combustion du cycle précédent soit retenue dans la chambre de travail pendant le processus consistant à évacuer les gaz de combustion et à les remplacer en partie par de l'air frais, par ouverture des moyens distributeurs d'échappement et d'admission,
la communication entre la deuxième cavité et la chambre de travail, lorsque les moyens distributeurs d'admission sont en position d'ouverture, d'une part, et la forme des parois de la chambre de travail, d'autre part, sont agencées de manière que le flux d'air frais pénètre dans la chambre de combustion, alors que le volume de la chambre de travail devient minimal en raison du mouvement relatif du piston, de façon à provoquer un mouvement de rotation intense du fluide de travail à l'intérieur de la chambre de combustion, en empêchant autant que possible, grâce à la centrifugation de l'air frais obtenue par ce mouvement de rotation et à la différence de densité entre l'air frais et les gaz de combustion, l'air frais de se mélanger à l'intérieur de la chambre de combustion aux gaz de combustion retenus dans celle-ci, et à former dans ladite chambre de combustion une zone centrale où la concentration des gaz de combustion et la température sont maximales et une zone périphérique où la concentration d'air frais est maximale et la température minimale, et
les susdits moyens d'introduction de combustible sous pression sont agencés de manière à injecter le combustible directement dans la susdite zone centrale, au moins au début de chaque période d'injection.

2. Procédé selon la revendication 1, caractérisé en ce que la masse des gaz de combustion retenus dans la chambre de travail, d'un cycle sur l'autre, est au moins égale à 10 %, de préférence à 15 %, de la masse du fluide de travail contenu dans cette dernière chambre au moment où les communications entre celle-ci et l'une et l'autre des susdites cavités viennent d'être interrompues au cours de chaque cycle, alors que le moteur fonctionne au moins approximativement à sa vitesse nominale.

3. Procédé selon la revendication 1, caractérisé en ce qu'on choisit la température de l'air admis et la proportion des gaz retenus dans la chambre de travail, d'un cycle sur l'autre, compte tenu des autres paramètres de fonctionnement du moteur, de façon telle que, si on mélangeait les gaz retenus et l'air frais avant d'injecter le combustible, la température du mélange ainsi obtenue au moment de l'injection pourrait être inférieure à celle où l'auto-inflammation du combustible se produit de façon stable et sans production excessive d'imbrûlés.

4. Procédé selon l'une quelconque des revendications 1 à 3, caractérisé en ce qu'on choisit la température de l'air admis et la proportion des gaz retenus dans la chambre de travail, d'un cycle sur l'autre, compte tenu des autres paramètres de fonctionnement du moteur, de façon telle que la température moyenne maximale du fluide de travail ne dépasse pas la valeur, de l'ordre de 1500°C, à partir de laquelle la production de NOₓ devient excessive.

5. Procédé selon l'une quelconque des revendications 1 à 4, caractérisé en ce que le moteur fonctionne selon un cycle à deux temps.

6. Procédé selon la revendication 5, caractérisé en ce que les susdits moyens distributeurs sont actionnés de telle façon que le volume d'air frais introduit dans la chambre de travail soit inférieur au volume de la chambre de travail à l'instant où les moyens distributeurs d'échappement et d'admission viennent de revenir en position de fermeture au cours d'un cycle.

7. Procédé selon la revendication 5 ou 6, caractérisé en ce que les moyens distributeurs d'admission sont essentiellement constitués par des lumières communiquant avec la susdite deuxième cavité, aménagées dans la partie de la paroi latérale du cylindre qui est parcourue par le piston et découvertes par celui-ci lorsque le volume de la chambre de travail est au voisinage de sa valeur maximale, lesdites lumières étant inclinées par rapport à une normale à ladite paroi latérale, située au voisinage de ces lumières, de façon à créer le susdit mouvement de rotation et
en ce que les moyens distributeurs d'échappement sont constitués par au moins une soupape d'échappement aménagée dans la susdite culasse et disposée de telle façon qu'elle laisse libre la région centrale de celle-ci en permettant de disposer dans cette région les moyens d'introduction de combustible sous pression.

8. Procédé selon la revendication 7, caractérisé en ce que la chambre de combustion est constituée par l'espace qui est délimité par la culasse, la susdite paroi latérale et le piston lorsque celui-ci est au voisinage de la position correspondant à la valeur minimale du volume de la chambre de travail.

9. Procédé selon la revendication 8, caractérisé en ce que la chambre de combustion (2) a une forme de révolution, et la valeur minimale (e) de la distance entre le piston (5) et la culasse (6) est telle que les mouvements radiaux du fluide de travail créés par la coopération entre la surface transversale (14) du piston (5) et la culasse (6) soient aussi réduits que possible.

10. Procédé selon la revendication 5 ou 6, caractérisé en ce que les moyens distributeurs d'échappement et les moyens distributeurs d'admission sont constitués tous deux par des soupapes aménagées dans la culasse.

11. Procédé selon la revendication 10, caractérisé en ce que la susdite chambre de combustion est constituée par un évidement, de préférence de révolution, aménagé dans la culasse et dans lequel est située la tête de la soupape d'admission, lequel évidement communique avec le volume que parcourt le piston par un passage dont les parois sont agencées pour diriger le flux d'air frais vers le piston, lorsque les soupapes d'échappement et d'admission sont ouvertes simultanément et que le piston se trouve dans des positions correspondant à des valeurs du volume de la chambre de travail voisines de la valeur maximale, et que la forme du susdit passage est telle que, quand le piston remonte, le fluide de travail est injecté dans la chambre de combustion principalement tangentiellement à une paroi périphérique dudit passage de façon à créer un mouvement de rotation du fluide de travail dans ledit évidement autour de son axe.

12. Procédé selon la revendication 11, caractérisé en ce que les moyens d'introduction de combustible sous pression sont situés dans le susdit évidement, la soupape d'échappement étant de préférence située sur ledit ciel de culasse, ledit évidement et ledit volume communiquant par un passage dont les parois sont agencées de façon à diriger le flux d'air frais introduit dans la chambre de travail, lorsque les soupapes d'échappement et d'admission sont ouvertes simultanément et que le piston se trouve au voisinage de la position correspondant au volume maximal de la chambre de travail, en direction du piston et tangentiellement à la partie de la paroi latérale du cylindre qui est la plus éloignée de la soupape d'échappement.

13. Procédé selon la revendication 11, caractérisé en ce que les parois du susdit passage sont orientées de telle façon que le flux d'air frais dirigé vers le piston ait une direction inclinée par rapport à l'axe de déplacement dudit piston de façon à induire un mouvement hélicoïdal dudit flux d'air dans le volume compris entre le piston et la culasse.

14. Procédé selon l'une quelconque des revendications 1 à 6 et 10 à 13, caractérisé en ce que les moyens d'introduction de combustible sous pression débouchent dans la chambre de combustion en face d'une soupape d'admission, dans la zone centrale de l'évidement.

15. Procédé selon la revendication 11, caractérisé en ce que le susdit évidement, qui est de révolution, a son axe qui est situé approximativement dans un plan perpendiculaire à l'axe du cylindre et ne passant pas par cet axe, le canal de transfert débouchant de préférence tangentiellement à la paroi du cylindre au voisinage de la génératrice la plus éloignée de la soupape d'échappement (figures 16 à 18).

16. Procédé selon la revendication 11, caractérisé en ce que le susdit évidement, qui est de révolution, à son axe qui est perpendiculaire à l'axe du cylindre et de préférence sécant avec celui-ci (ou passant à son voisinage immédiat) ; le canal de transfert débouche tangentiellement à la paroi du cylindre, au voisinage de la génératrice de ce cylindre la plus éloignée de la soupape d'échappement ; et les parois latérales du canal de transfert sont sensiblement parallèles entre elle et inclinées par rapport à l'axe du cylindre dans un plan tangent audit cylindre passant de préférence par la génératrice la plus éloignée de la soupape d'échappement (figures 19 à 21).

17. Procédé selon la revendication 11, caractérisé en ce que le susdit évidement, qui est de révolutionn, a son axe situé dans un plan perpendiculaire à l'axe du cylindre et de préférence sécant avec ce dernier axe (ou passant à son voisinage immédiat) ; le canal de transfert débouche tangentiellement à la paroi du cylindre ; et l'axe parallèle à l'axe du cylindre et passant par le centre du débouché du canal de transfert n'est pas sécant avec l'axe de révolution de l'évidement (figures 22 à 24).

18. Procédé selon l'une quelconque des revendications 1 à 17, caractérisé en ce que le moteur fonctionne selon un cycle à quatre temps.

19. Procédé selon la revendication 18, caractérisé en ce que les moyens distributeurs d'échappement sont fermés avant que le volume de la chambre de travail soit minimal et les moyens distributeurs d'admission ne s'ouvrent que pendant la course du piston correspondant à l'accroissement du susdit volume, au moment où l'arbre principal du moteur a une position sensiblement symétrique, par rapport à la position correspondant à la valeur minimale de ce volume, de celle correspondant à la fermeture des moyens distributeurs d'échappement.

20. Procédé selon la revendication 18, caractérisé en ce que les moyens distributeurs d'échappement sont fermés lorsque le volume de la chambre de travail est voisin de sa valeur minimale dans le cas où il risque de se produire une interférence entre le piston et lesdits moyens distributeurs d'échappement, puis rouverts lorsque ce volume atteint puis dépasse sa valeur minimale, puis fermés à nouveau alors que les moyens distributeurs d'admission s'entrouvent et que le piston est dans sa course d'augmentation dudit volume.

## Patentansprüche

1. Füllungsverfahren für einen Verbrennungsmotor mit Selbstzündung, der aufweist:
wenigstens eine Arbeitskammer, die durch eine Brennkammer und das variable Volumen gebildet wird, das im Inneren eines Zylinders durch einen Kolben und einen Zylinderkopf begrenzt wird,
Auspuffverteilmittel und Einlaßverteilmittel, die es gestatten, diese Arbeitskammer jeweils zyklisch mit einer ersten Kavität, die die in der Arbeitskammer gebildeten Verbrennungsgase aufnimmt, und danach und/oder gleichzeitig mit einer mit Frischluft versorgten zweiten Kavität zu verbinden, und
Mitteln zum Zuführen von Brennstoff unter Druck in die Brennkammer,
dadurch gekennzeichnet, daß
die Verteilmittel so betätigt werden, daß während des Prozesses bestehend aus Ausstoßen der Verbrennungsgase und teilweisem Ersetzen derselben durch die Frischluft, durch Öffnen der Auspuff- und Einlaßverteilmittel, ein beträchtlicher Teil der Verbrennungsgase des vorherigen Zyklus in der Arbeitskammer zurückgehalten wird,
die Verbindung zwischen der zweiten Kavität und der Arbeitskammer, wenn die Einlaßverteilmittel in der Öffnungsstellung sind, einerseits und die Form der Wände der Arbeitskammer andererseits so ausgebildet sind, daß, wenn aufgrund der Relativbewegung des Kolbens das Volumen der Arbeitskammer minimal wird, der Strom der Frischluft so in die Brennkammer eintritt, daß eine intensive Rotationsbewegung des Arbeitsfluids im Inneren der Brennkammer hervorgerufen wird, wobei die Frischluft dank der durch diese Rotationsbewegung und des Dichteunterschieds zwischen der Frischluft und den Verbrennungsgasen erhaltenen Zentrifugation der Frischluft soweit wie möglich daran gehindert wird, sich im Inneren der Brennkammer mit den darin zurückgehaltenen Verbrennungsgasen zu vermischen, und daß in dieser Brennkammer eine zentrale Zone, in der die Konzentration der Verbrennungsgase und die Temperatur maximal sind, und eine Randzone gebildet wird, in der die Konzentration der Fischluft maximal und die Temperatur minimal ist, und
die oben genannten Mittel zum Zuführen von Brennstoff unter Druck so ausgebildet sind, daß der Brennstoff wenigstens am Beginn jeder Einspritzperiode direkt in die oben genannte zentrale Zone eingespitzt wird.

2. Verfahren nach Anspruch 1, dadurch gekennzeichnet, daß die Masse der von einem Zyklus zum anderen in der Arbeitskammer zurückgehaltenen Verbrennungsgase wenigstens gleich 10 %, vorzugsweise 15 % der Masse des Arbeitsfluids ist, das in dieser letzteren Kammer in dem Moment enthalten ist, in dem die Verbindungen zwischen dieser und der einen und der anderen der oben genannten Kavitäten im Verlauf jedes Zyklus gerade unterbrochen worden ist, wenn der Motor wenigstens annähernd mit seiner Nominalgeschwindigkeit läuft.

3. Verfahren nach Anspruch 1, dadurch gekennzeichnet, daß man die Temperatur der Ansaugluft und den Anteil der von einem Zyklus zum anderen in der Arbeitskammer zurückgehaltenen Gase in Anbetracht der übrigen Betriebsparameter des Motors so wählt, daß, wenn man die zurückgehaltenen Gase und die Frischluft vor der Einspritzung des Brennstoffs mischen würde, die Temperatur des so erhaltenen Gemisches im Augenblick der Einspritzung kleiner sein könnte als diejenige, bei der die Selbstentzündung des Brennstoffs stabil und ohne übermäßige Erzeugung von Verbrennungsrückständen stattfindet.

4. Verfahren nach einem der Ansprüche 1 bis 3, dadurch gekennzeichnet, daß man die Temperatur der Ansaugluft und den Anteil der in der Arbeitskammer von einem Zyklus zum anderen zurückgehaltenen Gase in Anbetracht der übrigen Betriebsparameter des Motors so wählt, daß die mittlere maximale Temperatur des Arbeitsfluids nicht den Wert in der Größenordnung von 1500 °C überschreitet, von dem an die Erzeugung von NOx exzessiv wird.

5. Verfahren nach einem der Ansprüche 1 bis 4, dadurch gekennzeichnet, daß der Motor mit einem Zweitaktzyklus arbeitet.

6. Verfahren nach Anspruch 5, dadurch gekennzeichnet, daß die oben genannten Verteilmittel so betätigt werden, daß das Volumen der in die Arbeitskammer eingeleiteten Frischluft kleiner ist als das Volumen der Arbeitskammer in dem Augenblick, in dem die Auspuff- und Einlaßverteilmittel im Verlauf eines Zyklus gerade in ihre Schließstellung zurückgekeht sind.

7. Verfahren nach Anspruch 5 oder 6, dadurch gekennzeichnet, daß die Einlaßverteilmittel im wesentlichen durch Einlaßöffnungen gebildet werden, die mit der oben genannten zweiten Kavität in Verbindung stehen und in dem Teil der Seitenwand des Zylinders ausgebildet sind, der von dem Kolben durchlaufen wird und durch diesen freigegeben wird, wenn das Volumen der Arbeitskammer in der Nähe seines Maximalwertes ist, wobei diese Einlaßöffnungen in bezug auf eine Normale zu dieser Seitenwand der Nähe dieser Einlaßöffnungen derart geneigt sind, daß die oben genannte Rotationsbewegung erzeugt wird, und
daß die Auspuffverteilmittel durch wenigstens ein Auspuffventil gebildet werden, das in dem oben genannten Zylinderkopf ausgebildet und so angeordnet ist, daß es den zentralen Bereich desselben freiläßt und es gestattet, in diesem Bereich die Mittel zum Zuführen des Brennstoffs unter Druck anzuordnen.

8. Verfahren nach Anspruch 7, dadurch gekennzeichnet, daß die Brennkammer durch den Raum gebildet wird, der durch den Zylinderkopf, die oben genannte Seitenwand und den Kolben begrenzt wird, wenn sich dieser in der Nähe der Position befindet, die dem minimalen Wert des Volumens der Arbeitskammer entspricht.

9. Verfahren nach Anspruch 8, dadurch gekennzeichnet, daß die Brennkammer (2) eine Rotationsform hat und der kleinste Wert (e) des Abstands zwischen dem Kolben (5) und dem Zylinderkopf (6) so ist, daß die durch das Zusammenwirken zwischen der Stirnfläche (14) des Kolbens (5) und dem Zylinderkopf (6) erzeugten Radialbewegungen des Arbeitsfluids so weit wie möglich reduziert sind.

10. Verfahren nach Anspruch 5 oder 6, dadurch gekennzeichnet, daß die Auspuffverteilmittel und die Einlaßverteilmittel beide durch in dem Zylinderkopf ausgebildete Ventile gebildet werden.

11. Verfahren nach Anspruch 10, dadurch gekennzeichnet, daß die oben genannte Brennkammer durch eine vorzugsweise rotationssymmetrische Ausnehmung gebildet wird, die in dem Zylinderkopf ausgebildet ist und in der sich der Kopf des Einlaßventils befindet, welche Ausnehmung mit dem von dem Kolben durchlaufenen Volumen über einen Kanal in Verbindung steht, dessen Wände so angeordnet sind, daß der Strom der Frischluft auf den Kolben gerichtet wird, wenn die Auspuff- und Einlaßventile gleichzeitig geöffnet sind und der Kolben sich in Positionen befindet, die Werten des Volumens der Arbeitskammer in der Nähe des Maximalwertes entsprechen, und daß die Form des oben genannten Kanals so ist, daß, wenn sich der Kolben wieder aufwärts bewegt, das Arbeitsfluid in der Hauptsache tangential zu einer Umfangswand dieses Kanals in die Brennkammer injiziert wird, so daß eine Rotationsbewegung des Arbeitsfluids in dieser Ausnehmung um ihre Achse herum erzeugt wird.

12. Verfahren nach Anspruch 11, dadurch gekennzeichnet, daß die Mittel zum Zuführen des Brennstoffs unter Druck sich in der oben genannten Ausnehmung befinden, wobei sich das Auspuffventil vorzugsweise in dem genannten Zylinderkopfdeckel befindet, diese Ausnehmung und das genannte Volumen über einen Kanal miteinander in Verbindung stehen, dessen Wände so angeordnet sind, daß der Strom der in die Arbeitskammer eingeleiteten Frischluft, wenn die Auspuff- und Einlaßventile gleichzeitig offen sind und der Kolben sich in der Nähe der Position befindet, die dem maximalen Volumen der Arbeitskammer entspricht, in Richtung auf den Kolben und tangential zu dem Teil der Seitenwand des Zylinders gerichtet wird, der von dem Auspuffventil am weitesten entfernt ist.

13. Verfahren nach Anspruch 11, dadurch gekennzeichnet, daß die Wände des oben genannten Kanals so orientiert sind, daß der Strom der auf den Kolben gerichteten Frischluft eine Richtung hat, die in bezug auf die Bewegungsachse dieses Kolbens so geneigt ist, daß eine schraubenförmige Bewegung des Luftstroms in dem zwischen dem Kolben und dem Zylinderkopf eingeschlossenen Volumen induziert wird.

14. Verfahren nach einem der Ansprüche 1 bis 6 und 10 bis 13, dadurch gekennzeichnet, daß die Mittel zum Zuführen von Brennstoff unter Druck in der zentralen Zone der Ausnehmung gegenüberliegend zu einem Einlaßventil in die Brennkammer münden.

15. Verfahren nach Anspruch 11, dadurch gekennzeichnet, daß die Achse der oben genannten rotationssymmetrischen Ausnehmung annähernd in einer zur Achse des Zylinders senkrechten Ebene liegt und nicht durch diese Achse geht, wobei der Transferkanal vorzugsweise tangential zu der Wand des Zylinders in der Nähe der am weitesten vom Auspuffventil entfernten Mantellinie mündet (Figuren 16 bis 18).

16. Verfahren nach Anspruch 11, dadurch gekennzeichnet, daß die Achse der oben genannten rotationssymmetrischen Ausnehmung zur Achse des Zylinders senkrecht ist und diese vorzugsweise schneidet (oder in ihrer unmittelbaren Nähe verläuft), der Transferkanal tangential zu der Wand des Zylinders in der Nähe der Mantellinie dieses Zylinders mündet, die am weitesten vom Auspuffventil entfernt ist, und die Seitenwände des Transferkanals im wesentlichen zueinander parallel und in bezug auf die Achse des Zylinders in einer zu dem Zylinder tangentialen Ebene geneigt sind, die vorzugsweise durch die am weitesten vom Auspuffventil entfernte Mantellinie verläuft (Figuren 19 bis 21).

17. Verfahren nach Anspruch 11, dadurch gekennzeichnet, daß die Achse der oben genannten rotationssymmetrischen Ausnehmung in einer zur Achse des Zylinders senkrechten Ebene liegt und diese letztere Achse vorzugsweise schneidet (oder in ihrer unmittelbaren Nähe verläuft), der Transferkanal tangential zur Wand des Zylinders mündet und die zur Achse des Zylinders parallele und durch die Mitte der Mündung des Transferkanals gehende Achse nicht die Rotationssymmetrieachse der Ausnehmung schneidet (Figuren 22 bis 24).

18. Verfahren nach einem der Ansprüche 1 bis 17, dadurch gekennzeichnet, daß der Motor mit einem Viertaktzyklus arbeitet.

19. Verfahren nach Anspruch 18, dadurch gekennzeichnet, daß die Auspuffverteilmittel geschlossen sind, bevor das Volumen der Arbeitskammer minimal ist, und die Einlaßverteilmittel sich während der Bewegung des Kolbens, die der Vergrößerung des oben genannten Volumens entspricht, erst in dem Moment öffnen, in dem die Hauptwelle des Motors eine Position hat, die in bezug auf die dem kleinsten Wert dieses Volumens entsprechende Position symmetrisch zu der Position ist, die dem Schließen der Auspuffverteilmittel entspricht.

20. Verfahren nach Anspruch 18, dadurch gekennzeichnet, daß die Auspuffverteilmittel geschlossen sind, wenn das Volumen der Arbeitskammer in der Nähe seines minimalen Wertes ist, falls die Gefahr besteht, daß der Kolben an den Auspuffverteilmitteln anstößt, sich dann wieder öffnen, wenn dieses Volumen seinen minimalen Wert erreicht und dann überschreitet, und sich erneut schließen, wenn die Einlaßverteilmittel sich zu öffnen beginnen und der Kolben sich auf dem Weg der Vergrößerung des genannten Volumens befindet.

## Claims

1. Process for supplying a compression-ignition internal combustion engine, which comprises
at least one working chamber consisting of a combustion chamber and the variable volume defined inside a cylinder by a piston and a cylinder head;
exhaust distributor means and intake distributor means enabling said working chamber to be cyclically brought into communication with, respectively, a first cavity collecting the combustion gases formed in the working chamber and, successively and/or simultaneously, a second cavity supplied with fresh air; and
means for introducing pressurised fuel into said combustion chamber;
characterised in that
the distributor means are actuated so that a substantial proportion of the combustion gases of the previous cycle are retained in the working chamber during the process which consists in evacuating the combustion gases and partly replacing them with fresh air, by opening the exhaust and intake distributor means,
the communication between the second cavity and the working chamber, when the intake distributor means are in the open position, on the one hand, and the shapes of the walls of the working chamber, on the other hand, are designed so that the flow of fresh air enters the combustion chamber, whereas the volume of the working chamber is minimised owing to the relative movement of the piston, so as to cause an intense rotational movement of the working fluid inside the combustion chamber, whilst as far as possible preventing the fresh air from being mixed inside the combustion chamber with the combustion gases held therein, by virtue of the centrifugation of the fresh air obtained by this rotational movement and the difference in density between the fresh air and the combustion gases, and forming in said combustion chamber a central zone where the concentration of the combustion gases and the temperature are at their maximum and a peripheral zone in which the concentration of fresh air is at a maximum and the temperature is at a minimum, and
the abovementioned means for introducing pressurised fuel are arranged so that the fuel is injected directly into said central zone, at least at the beginning of each injection period.

2. Process according to claim 1, characterised in that the mass of combustion gases held in the working chamber, from one cycle to the next, is equal to at least 10 %, preferably 15 %, of the mass of the working fluid contained in said chamber at the moment when communications between the chamber and the abovementioned cavities have just been broken off during each cycle, whilst the engine operates at least approximately at its rated speed.

3. Process according to claim 1, characterised in that the temperature of the air taken in and the proportion of gases retained in the working chamber are selected, from one cycle to the next, as a function of the other operating parameters of the engine, so that, if the retained gases and the fresh air were mixed before the injection of the fuel, the temperature of the mixture thus obtained at the moment of injection might be less than the temperature at which the fuel automatically ignites in a stable manner without producing excessive amounts of incombustible material.

4. Process according to any one of claims 1 to 3, characterised in that the the temperature of the air taken in and the proportion of gases retained in the working chamber are selected, from one cycle to the next, as a function of the other operating parameters of the engine, so that the mean maximum temperature of the working fluid does not exceed the level, of the order of 1500°C, above which the production of NOₓ becomes excessive.

5. Process according to any one of claims 1 to 4, characterised in that the engine operates according to a two-stroke cycle.

6. Process according to claim 5, characterised in that the distributor means are actuated so that the volume of fresh air introduced into the working chamber is less than the volume of the working chamber at the moment when the exhaust and intake distributor means have just returned to the closed position in the course of a cycle.

7. Process according to claim 5 or 6, characterised in that the intake distributor means consist essentially of ports communicating with said second cavity, formed in the part of the side wall of the cylinder through which the piston travels and uncovered by said piston when the volume of the working chamber is close to its maximum value, said ports being inclined relative to a line perpendicular to said side wall, located in the vicinity of these ports, so as to create the abovementioned rotational movement and
in that the exhaust distributor means consist of at least one exhaust valve provided in said cylinder head and arranged so that it leaves the central region of the cylinder head free, enabling the means for introducing pressurised fuel to be arranged in this region.

8. Process according to claim 7, characterised in that the combustion chamber consists of the space defined by the cylinder head, the abovementioned side wall and the piston when the latter is close to the position corresponding to the minimum value of the volume of the working chamber.

9. Process according to claim 8, characterised in that the combustion chamber (2) is revolutionary in shape and the minimum value (e) of the spacing between the piston (5) and the cylinder head (6) is such that the radial movements of the working fluid created by the cooperation between the transverse surface (14) of the piston (5) and the cylinder head (6) are as slight as possible.

10. Process according to claim 5 or 6, characterised in that the exhaust distributor means and the intake distributor means both consist of valves provided in the cylinder head.

11. Process according to claim 10, characterised in that the combustion chamber consists of a recess, preferably revolutionary in shape, provided in the cylinder head, in which the head of the intake valve is located, said recess communicating with the space through which the piston travels via a passage the walls of which are arranged so as to direct the flow of fresh air towards the piston, when the exhaust and intake valves are open simultaneously and the piston is in one of the positions corresponding to values for the volume of the working chamber which are close to the maximum value, and the shape of the passage is such that, when the piston rises, the working fluid is injected into the combustion chamber chiefly at a tangent to a peripheral wall of said passage, so as to create a rotational movement of the working fluid in said recess about its axis.

12. Process according to claim 11, characterised in that the means for introducing fuel under pressure are located in said recess, the exhaust valve preferably being located on the crown of said cylinder head, said recess and said space communicating via a passage the walls of which are arranged so as to direct the flow of fresh air introduced into the working chamber, when the exhaust and intake valves are open simultaneously and the piston is close to the position corresponding to the maximum volume of the working chamber, towards the piston and at a tangent to the part of the side wall of the cylinder which is furthest from the exhaust valve.

13. Process according to claim 11, characterised in that the walls of the passage are oriented so that the flow of fresh air directed towards the piston travels in a direction which is inclined relative to the axis of displacement of said piston, so as to induce a helical movement in said flow of air in the space defined between the piston and the cylinder head.

14. Process according to any one of claims 1 to 6 and 10 to 13, characterised in that the means for introducing pressurised fuel open into the combustion chamber opposite an intake valve, in the central zone of the recess.

15. Process according to claim 11, characterised in that the recess, which is of revolutionary shape, has its axis located approximately in a plane perpendicular to the axis of the cylinder and not passing through this axis, the transfer channel preferably opening out at a tangent to the wall of the cylinder in the vicinity of the generatrix which is furthest from the exhaust valve (Figures 16 to 18).

16. Process according to claim 11, characterised in that the recess, which is of revolutionary shape, has its axis perpendicular to the axis of the cylinder and preferably secant therewith (or passing in its immediate vicinity); the transfer channel opens out tangentially to the wall of the cylinder in the vicinity of the generatrix of this cylinder which is furthest from the exhaust valve; and the side walls of the transfer channel are substantially parallel to one another and inclined relative to the axis of the cylinder in a plane tangent to said cylinder and preferably passing through the generatrix furthest from the exhaust valve (Figures 19 to 21).

17. Process according to claim 11, characterised in that the recess, which is of revolutionary shape, has its axis located in a plane perpendicular to the axis of the cylinder and preferably secant with this latter axis (or passing in its immediate vicinity); the transfer channel opens out tangentially to the wall of the cylinder; and the axis parallel to the axis of the cylinder and passing through the centre of the opening end of the transfer channel is not secant with the axis of revolution of the recess (Figures 22 to 24).

18. Process according to any one of claims 1 to 17, characterised in that the engine operates in a four-stroke cycle.

19. Process according to claim 18, characterised in that the exhaust distributor means are closed before the volume of the working chamber is at its minimum and the intake distributor means open only during the travel of the piston corresponding to the increase in said volume, at the moment when the main shaft of the engine is in a position which is substantially symmetrical, relative to the position corresponding to the minimum value of this volume, with that corresponding to the closure of the exhaust distributor means.

20. Process according to claim 18, characterised in that the exhaust distributor means are closed when the volume of the working chamber is close to its minimum value in cases where there is a danger of interference occurring between the piston and said exhaust distributor means, then re-opened when this volume achieves and then exceeds its minimum value, then closed again when the intake distributor means are partly open and the piston is in the process of increasing this volume.
